# EUROPEAN PATENT APPLICATION

(11) **EP 0 772 145 A2**
(43) Date of publication of application: **07.05.1997**
(21) Application number: 96117614.6
(22) Date of filing: 04.11.1996
(51) Int. Cl.: G06K 5/02

(54) **System and method for determining quality of printed matter**

(30) Priority: 06.11.1995 US 554669
(71) Applicant: JOHNSON & QUIN, INC., Niles, IL 60648 (US)
(72) Inventor: Esfahani, Majid H., Buffalo Grove, Illinois 60089 (IT)
(74) Representative: von Samson-Himmelstjerna, Friedrich R., Dipl.-Phys.

(57) **Abstract**

An apparatus and method for determining print quality of a printer wherein printed matter is controllably presented to an optical transducer unit which scans user or machine selected areas of said printed matter to generate a signal that is processed by a processing unit to determine print quality. The processing unit processes the signal in an efficient and rapid three step method in which the signal produced by the transducer unit is modified and segmented to determine general characteristics, recognized by a recognition engine and finally checked for voids, spots, blobs or the like. The invention provides an operator with the ability to set quality thresholds such as an acceptable number of quality defects in a single scan. If the number of quality defects exceeds the user input quality limit, the processor unit determines that the printed matter is poor quality and may cause the printer to cease printing.

## Description

### FIELD OF THE INVENTION

The present invention relates generally to a system and method for determining the quality of a high speed, electronic printer's output. More particularly, the present invention relates to a system and method for in-line monitoring of such a printer's output in order to verify that selected printed matter meets certain quality standards.

### BACKGROUND OF THE INVENTION

Many computer printing applications require the use of high speed, high volume printers. Typical examples include personalized letters, invoices, checks, direct marketing solicitations and the like. Computer printing operations generally include a high speed electronic printer coupled with other support devices such as feed mechanisms which direct paper or other stock into and out of a printer. These operations also frequently have post-printing devices or mechanisms that perform additional operations such as cutting and trimming, folding the printed matter, inserting the printed matter into envelopes, or sorting.

Currently, computer printing operations are not as fully automated as is desirable for maximum efficiency. Ideally, the printer and its associated intelligence, as well as all post-printing operations, operate with as little human interaction as possible. The benefits of automation over human operators are well known. For repetitive tasks such as folding and inserting printed matter into envelopes, automated machines performing these tasks are generally faster, more reliable, and less costly than human operators performing the same tasks.

Human operators, however, are still required to supervise the automated equipment for a variety of reasons. Mechanical failures are one class of problems associated with automated equipment requiring human supervision. For example, if a paper feed mechanism becomes jammed or otherwise mechanically disabled, a human operator must be available to correct the problem and restart the job. Poor print quality represents another class of problems that historically has required human supervision to detect and correct. That is, human operators are required to periodically verify the print quality of the electronic printer to insure that the printer is accurately performing its job in a proper location and without introducing other printing defects such as extraneous toner (dry ink), streaks, smears, partial prints or failure to print at all.

Developers of computer printing equipment have continued to improve and refine their designs to reduce the occurrences of mechanical failures and thereby reduce human interaction. Consequently, the mechanisms associated with electronic printers have improved. The problems associated with quality, however, are less amenable to solution because of differing perspectives on the definition of quality and a potential for varied responses to quality degradation as printer quality diminishes. Although developers are constantly striving for improvements, printers still have many problems which result in poor output quality.

High quality printing is an extremely important aspect of most computer printing operations. If errors occur during the printing process, a potentially serious ripple effect can occur. For example, if a mailing operation is printing and sending invoices, such as telephone bills, to a large number of customers, poor print quality may cause erroneous or illegible invoices to be sent to hundreds or perhaps even thousands of customers. Moreover, even if the invoices that are sent to the customers are sufficiently legible to be read by humans, these invoices may not be of sufficient quality to be read by remittance processing machines, resulting in costly manual processing. Thus, in those cases, such as telephone bills, which have portions of the printed matter that will ultimately be read by machines, print quality is extremely important.

Print quality is also becoming more important for purely aesthetic reasons. Businesses and organizations such as banks, insurance companies, public utilities, mail order retailers and the like have determined that their primary contact with their customers is made through the mail. Thus, the image portrayed to the customers is highly dependent upon the quality and nature of the mail items sent. Maintaining a good image with customers is of vital importance to such businesses, particularly where the business is based on customers' trust and confidence. A mailing rife with defects and poor print quality would tend to portray an image of incompetence and would undermine customers' confidence.

Detecting flaws in print quality is therefore pivotal to the success of most printing operations. Moreover, the rapid detection of printing flaws is also important to the success of computer printing operations. If a printing flaw is detected only long after the job has been printed, the job will have to be reprinted and, possibly, put other print jobs out of sequence to accommodate the reprinting. Additionally, a relatively minor and easily correctable printing flaw, such as low toner, may dramatically affect the quality of a large print job and, in turn, may require the entire print job to be reprinted at considerable expense.

To reduce or prevent these occurrences, human operators have historically checked print quality by periodically stopping the automated printing process and examining the printed matter for quality. This solution to quality checking, however, is inadequate. Modern automated computer-controlled printers print at an extremely high rate when compared to older technology. In some instances, such modern printers print at 250 pages per minute or even faster. With costly devices printing at such high printing speed, it is important to reduce printer interruptions even for small amounts of time. Consequently, operators of computer printing operations are reluctant to frequently inspect the printing quality. Moreover, human operators sometimes fail to detect quality problems due to simple negligence or due to a lack of sufficient time to inspect the printing. Finally, it is inefficient to require a human operator to watch over a high quality print job if, as in most cases, there is no problem with the printing.

### OBJECTS AND SUMMARY OF THE INVENTION

It is therefore the general object of the present invention to provide a quality verification system and method that accurately determines the quality of variable printed matter.

It is another object of the invention to implement a quality verification system and method that requires minimum human interaction.

It is another object of the invention to implement a quality verification system and method that can be easily integrated into existing computer printing operations.

Yet another object of the invention is to provide a quality verification system and method that can verify data content as well as the quality.

It is a further object of the invention to permit easy access by a user to select areas to be inspected and to set quality standards or limits for these areas.

Another object of the invention is to adapt to changing conditions in order to differentiate between ordinary environmental changes and serious print quality problems.

It is a further object of the invention to provide a system and method that interfaces with the printer in order to control the printer.

A related object of the invention is to provide a system with a quality system processing unit which is capable of requesting information and passing information to a printer interface.

Lastly, it is an important object of the invention to predict and detect quality changes in the printed matter.

The foregoing and other objects and advantages are accomplished by the present invention which includes a system and method that receives output from a printer, scans selected areas of the printed matter, analyzes the output for quality through a recognition system, and transmits the printed matter out of the system. An operator, through a console, selects areas of the printed matter to analyze and also inputs quality limits or thresholds for the system and method to use when comparing scanned data with benchmark data. The system and method may receive print information from a printer interface including the data that is being printed and the location of the data.

In one preferred embodiment, the system and method analyzes the scanned data by segmenting the data into characters and then performing three levels of quality checks. A first level check is a fast low level verification that the printed characters are properly positioned and have proper print characteristics. A second level check more stringently verifies the font and character. A third level check verifies the quality of the printed matter by inspecting for print defects such as spurious spots, voids and streaks caused by low toner or printer malfunction. If the system and method detects a failure of any single level, it logs an error in a file and possibly stops the print job. The user has the ability to input the criteria for the system and method to cause the printer to cease printing.

### BRIEF DESCRIPTION OF THE DRAWINGS

FIGURE 1 is a block diagram showing the components of a preferred embodiment of the invention and their interconnections.

FIG. 2 is a schematic diagram of the pathway of a representative roll of printed matter as it is being read by an optical transducer.

FIG. 3A is an illustration of a representative page of printed matter to be inspected.

FIG. 3B is an illustration of an area of FIG. 3A that represents high quality printing.

FIGS. 3C-3E are illustrations of the same area of FIG. 3A that represent various printing problems resulting in low quality printed matter.

FIG. 4 is a flow diagram illustrating the steps taken by a preferred embodiment of the invention.

FIG. 5 is a flow diagram illustrating the steps of a preferred embodiment of the invention to be used to determine print quality of printed matter.

FIGS. 6A-6C are illustrations of a single character analyzed in conformity with a preferred embodiment of the invention.

FIG. 7A is an illustration of an alternative representative printed page to be inspected in accordance with the invention.

FIGS. 7B-7C are expanded views of FIG. 7A showing specific areas to be inspected in accordance with the invention.

FIG. 8 is a block diagram illustrating a preferred physical arrangement of a preferred embodiment of the invention.

### DETAILED DESCRIPTION OF THE PREFERRED EMBODIMENT

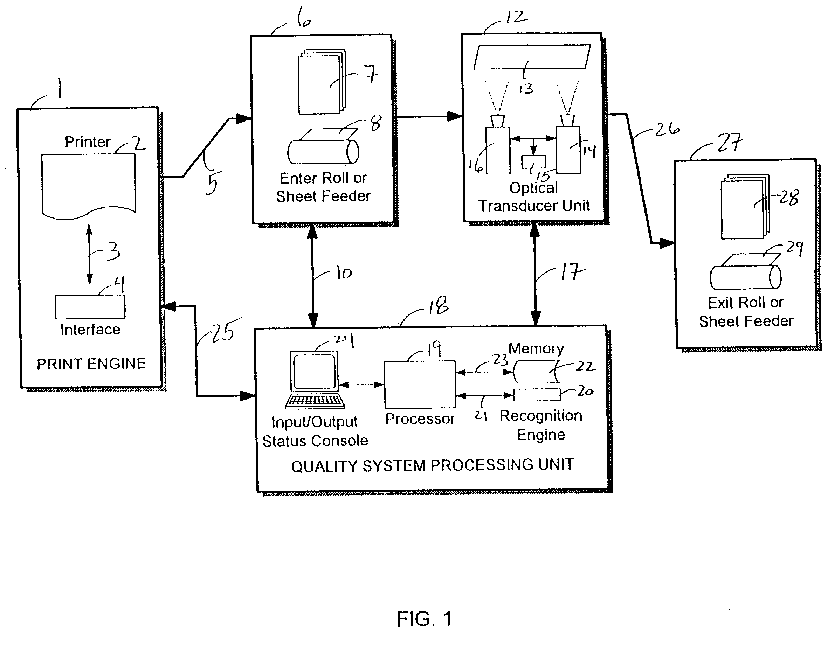

Fig. 1 is a block diagram of a preferred embodiment of the invention. Fig. 1 may represent the invention in a typical computer printing environment. Fig. 1 includes a print engine 1, a roll or sheet feeder mechanism 6, an optical transducer unit 12, an exit roll or sheet feeder mechanism 26, and a quality system processing unit ("QSPU") 18.

Print engine 1 includes a printer 2 and a printer interface 4. Printer 2 may be fed paper by a continuous roll feeder (not shown). Printer 2 and interface 4 are communicatively coupled through appropriate cabling and other hardware as well as through any appropriate and necessary software such as protocol stacks. The connection between printer 2 and interface 4 is schematically illustrated as a two way connection 3. Two way connection 3 illustrates that printer 2 and interface 4 can both send and receive information. In one preferred embodiment, printer 2 of print engine 1 is a typical high rate printer such as an IBM Pennant Systems 3900 printer. This is a high speed non-impact type printer that is well suited for operation in a large scale computer printing operation.

Interface 4 of print engine 1 may be any printer interface. In one embodiment, printer interface 4 is capable only of basic control over printer 2 and providing such functions as starting and stopping the printer and providing status information such as printer out-of-paper or printer stopped. In an alternative embodiment, printer interface 4 is an "intelligent interface" capable of receiving and transmitting specific information regarding the print job to other devices. For example, print interface 4 may provide information about the data being printed and its physical printed location. Printer interface 4 may also be a stand-alone computing device and may entirely control the printer 2 or it may only be a means for the printer to communicate control signals. Thus, printer interface 4, as contemplated by the invention, provides a function that may be implemented in many different modes.

In the intelligent printer interface embodiment, printer interface 4 is able, at least, to provide access to information, in some form, regarding the data being printed and the orientation and coordinates of that data on the printed page. In this embodiment, printer interface 4 may receive information from print sources (not shown) which provide further input, data or instructions regarding the print job.

Printer interface 4, while represented as a separate component from printer 2, need not be physically separated from printer 2. In any embodiment, printer interface 4 should be able to provide or relay important instructions, such as stop or start print commands, to the printer based on communications with QSPU 18.

Printer interface 4 communicates with the QSPU through a two way connection that is schematically illustrated as connection 25. As in the case of connection 3, connection 25 schematically represents all necessary hardware, such as cabling and/or a network interface, and all necessary software, such as protocol stacks, to establish a communication link between print engine 1 and QSPU 18. Connection 25 may represent a direct connection, such as a serial interface, or it may represent a local area network ("LAN") connection, a wide area network connection or any other electrical connection that is capable of carrying data between two nodes or sites.

Printed matter is printed by print engine 1 and is physically transmitted to a roll or sheet feeder mechanism 6 via pathway 5. Pathway 5 is schematically illustrated in Fig. 1. Physically, pathway 5 includes all necessary rollers, platens and motors to guide the sheets or web of printed matter to feeder 6. As printer 2 prints a job, the printed matter is sent to roll or sheet feeder 6. Roll or sheet feeder 6 may handle either discrete sheets 7 of printed matter or the web of a roll 8 of printed matter. In one preferred embodiment, feeder 6 is dedicated to roll-fed printed matter which is received from printer 2 on the same roll.

Roll or sheet feeder 6 serves to align printed matter received from pathway 5 and printer 2 and to present the printed matter to optical transducer unit 12. Optical transducer unit 12 includes at least one optical transducer 14 which is capable of scanning a discrete area of printed matter, schematically illustrated in unit 12 as printed matter 13. Optical transducer unit 12 may also include additional transducers, such as transducer 16. This second optical transducer may be employed to provide processing of offset printed matter. Optical transducer unit 12 may also include four or more optical transducers in order to permit "two-up" processing of printed matter. Two-up processing is a term known in the art and refers to processing two separate print operations at the same time, usually side-by-side on a single web. Two-up processing may be more efficient than single processing.

Additional optical transducers may also be employed to provide full duplex scanning of printed matter. In the art, printed matter on only one side of a page is known as simplex printing, and printed matter printed on both sides of a page is known as duplex printing. To scan duplex printing, optical transducers are used to scan both sides of the web or sheet. Thus, the invention fully contemplates that unit 12 has as many additional transducers as necessary to implement the appropriate quality verification in either simplex or duplex scan mode.

Optical transducer 14 may be a CCD array, an LED array, a vidicon, a laser, or any other suitable optical means operative to produce electrical signals representative of the selected area of the printed matter. Preferably, transducer 14 is a CCD array having cells extending in one dimension perpendicular to the direction of motion of the printed matter 13. The transducing unit 12 is operatively coupled to appropriate associated hardware and software schematically illustrated as block 15. This hardware and software is necessary to permit transducer 14 and/or transducer 16 to focus on appropriate areas of the printed matter and to obtain an image of the printed matter. Block 15 represents hardware such as focussing circuits, triggers, frame grabbers, signal processing circuits and all necessary software to operate this hardware and transducer 16. These items are well-known and selection of such components may be optimized by a person of ordinary skill in the art for a particular application.

Optical transducer unit 12 is communicatively coupled to QSPU 18 via two way connection 17. As in the case of other connections, connection 15 includes all necessary hardware and software components to ensure data communications between the transducing unit 12 and the QSPU 18.

Optical transducer unit 12, through transducer 14 and hardware and software 15, is capable of focussing on a select area of printed matter. In a preferred embodiment, the transducer, such as transducer 14, focuses on a select area based on data supplied by QSPU 18 over communication connection 17. Many camera systems and scanner hardware well known in the art have the capability to focus on specific physical areas within a coordinate system. The ability of the preferred optical transducer to focus, however, should not be construed to mean that the transducer must focus on an area less than the entire printed sheet or the width of the entire printed roll.

As noted above, optical transducer unit 12, through representative transducers 14 and 16, operates to scan printed matter 13 and generate an electrical signal representative of the scanned areas of the printed matter. Thereafter, the electrical signal is transmitted via communication link 17 to QSPU 18 for further analysis. It is noted that transducer hardware 15 may provide additional circuitry to digitize the electrical signal prior to transmission to QSPU 18 or transducer hardware 15 may simply transmit an analog signal to QSPU 18 where it is later digitized. Both techniques are well known to persons of ordinary skill and either embodiment is permissible and within the scope of the invention.

After receiving the optical transducer signals, QSPU 18, among other things, processes the electrical signals to determine quality of the printed matter. QSPU 18 includes an input/output status console 24, a processor 19, at least one type of memory 22 communicatively coupled to processor 19 through two way connection 23 and a recognition engine 20, including appropriate data structures or methods, communicatively coupled to processor 19 through two way connection 21.

The QSPU components schematically illustrated in Fig. 1 are not intended to limit the QSPU to only those components. Indeed, it is appreciated by a person of ordinary skill that QSPU 18 also may require or utilize components which are not illustrated such as power supplies, an operating system, a network interface, a floppy or soft disk drive, a hard disk drive, CD-ROMs and CR-ROM drives, appropriate hardware and software drivers, read only memory, random access memory, input and output ports, an expansion bus, miscellaneous peripherals and the like.

Input/output status console 24 of QSPU 18 includes a display monitor and a keyboard or other input means, such as a touch screen or mouse, and is the means to permit operator input to QSPU 18 and to permit QSPU 18 to output information to an operator. Through status console 24, a user can input information and instructions to QSPU 18 regarding, among other things, error limits on the number of acceptable detected quality problems of the printed matter. The user can also select the area of the printed matter to analyze for quality. These user instructions and data may be stored in memory 22 of QSPU 18 which represents storage in either random access memory ("RAM") or in other memory such as a hard disk drive or magnetic tape. In a preferred embodiment, the status console 24 displays a graphical user interface ("GUI") to assist the input and output of data and instructions.

Status console 24 through its associated monitor and GUI is capable of providing information to operators regarding the printed matter. Status console 24 may perform such operations as graphically displaying printed matter being scanned or previously scanned by transducer unit 12. Status console 24 may also permit the user to review a history of quality problems. Additionally, status console 24 may also include alternative annunciators, other than a monitor, to warn human operators. Thus, status console 24 may include dedicated flashing lights or sirens or may even include a wireless paging system to inform operators outside the immediate physical vicinity of the printer that the printer is undergoing quality problems. Status console 24 may be a console dedicated to the QSPU 18 or it may be a console that further serves as a user interface for other mailroom functions, such as printing, sorting, post-finishing, etc. Indeed, the entire QSPU 18 may comprise hardware shared with such other mailroom functions.

Memory 22 of QSPU 18 may include memory such as random access memory, hard disk drives, floppy disk drives, CD-ROM disk drives, tape drives, optical storage devices, or any other suitable memory means. In a preferred embodiment, memory 22 includes at least 8 megabytes of random access memory, at least one floppy disk drive, and at least one hard disk drive of at least 100 megabytes of storage capacity.

Processor unit 19 of QSPU 18 may be any computing machine or data processing unit that is capable of executing instructions which are stored in QSPU 18 memory. In a preferred embodiment, QSPU 18 employs an Intel® type complex instruction set processor such as a Pentium® processor or a 486 processor and all associated hardware. In a preferred embodiment, QSPU 18 also utilizes a well known operating system such as Microsoft Windows® or IBM OS/2 Warp®. However, as processor technology is improved, it is expected that other processors including reduced instruction set processors and parallel processing units may be employed without departing from the scope of the invention. The functionality of processor unit 19 may be merely one of many tasks performed by a processor having oversight and control of multiple mailroom functions.

QSPU 18 also has a recognition engine 20, accessed through a data structure located in memory, that is used to resolve the image signals from transducer unit 12 into further electrical signals representative of the information content of the printed matter. Electrical signals produced by optical readers or transducers, such as those in transducer unit 12, are signals representative of the image of printed matter and not the content or quality of the printed matter. Thus, to produce further electrical signals representative of the content of printed matter, a recognition engine, such as engine 20, is utilized. Recognition engine 20 may be construed as either all necessary hardware and data structures implementing stored instructions or as the steps performed by hardware and/or data structures.

Recognition engine 20 may employ various recognition techniques. Many techniques are known in the art. United States Patent 5,067,088, assigned to the assignee of the present invention, and United States Patents 5,381,489, 5,369,715, and 5,335,290 teach different techniques used to perform optical character recognition ("OCR") and are hereby incorporated by reference. Indeed, commercially available software translates image information into content based information.

To facilitate the resolution of image signals or data into further signals representing content, special printing fonts are, at times, employed. These fonts include, for example, bar codes, OCR-A, OCR-B, and MICR or other fonts. The fonts have been specifically developed to be recognized by machine vision systems. That is, matter printed in one of these fonts is more easily recognized than matter printed in other fonts. In a preferred embodiment of the invention, recognition engine 20 detects the presence of a predefined font in printed matter and evaluates content based on that information. It is noted, however, that most printed matter is also capable of being analyzed by recognition engine 20.

Bar codes are a special form of information in printed matter. Ordinarily, a bar code image has no informational content to human beings. Rather, a machine is required to read and decode the information present in the bar code. Recognition engine 20 of QSPU 18 has the ability to recognize and decode bar code information. Recognition engine 20 also has the capability to optically detect and resolve matter printed with Magnetic Ink Character Recognition characters ("MICR"). MICR, specifically E13B MICR, for example, is a font commonly used by printing operations for printing checks and other financial information used by the banking community.

Once the printed matter is scanned or read by transducer unit 12 and these signals have been input to QSPU 18 for further processing, the printed matter is delivered to an exit roll or sheet feeder 27. Feeder 27 is similar to roll or sheet feeder 6. It is contemplated that feeder 27, as well as feeder 6, may be dedicated solely to feeding sheets or solely to feeding the web of a roll of printed matter. However, it is within the scope of the invention that a feeder that accepts and delivers both discrete sheets and a roll web may be successfully employed in the invention.

Feeder 27 receives printed matter 13 and aligns the printed matter for delivery to further post printing devices (not shown). As discussed above, many computer printing operations have post-printing or post processing devices which perform such operations as folding printed matter and/or inserting printed matter into envelopes or the like. It is expected that these devices and operations will be unaffected by the introduction of the invention into existing computer printing operations. Thus, it is possible for the present invention to be integrated into existing computer printing operation systems with minimal difficulty.

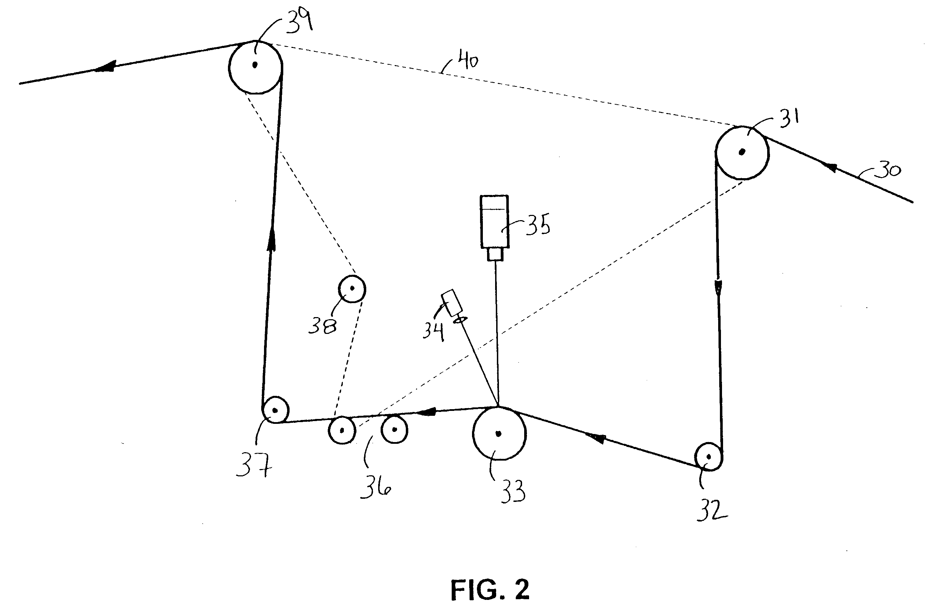

Turning to Fig. 2, therein is illustrated an example of one possible mechanical arrangement of the path of printed matter through input and exit feeders as the printed matter is presented to a transducer. Fig. 2 illustrates a web 30 of a roll of printed matter, rollers 31, 32, 37 and 39, a belt drive unit 36, a motor driven wheel 38 and belt 40, a curved surface 33 and an optical transducer 35 with light source and lens 34.

In Fig. 2, a single continuous web of printed matter 30 is fed from a printing unit (not shown) and is thereafter drawn over a first alignment roller 31. Roller 31 as well as roller 39 and belt drive unit 36 are coupled through frictional contact with belt 40 which is driven by a motor connected to wheel 38. Thus, belt 40, driven by wheel 38, drives belt drive unit 36 which, in turn, drives another belt in frictional engagement with web 30. This action by unit 36 causes the web 30 to progress through the system and across the path being scanned by an optical reader 35.

In the embodiment of Fig. 2, alignment rollers 31 and 32 may represent feeder 6 of the block diagram of Fig. 1. Rollers 31 and 32 may be adjustable, either manually or automatically, to reduce or increase tension in the web 30. Through the alignment of these rollers, the web 30 is forced to follow a path which places the web 30 in a position to be passed directly under optical reader 35.

Optical reader 35 of the embodiment of Fig. 2 corresponds to an optical transducer of transducer unit 12 of Fig. 1. Associated with the optical reader 35 and comprising further elements of the transducing unit are light source and focussing lens 34 which focuses light on a distinct area of printed matter 30. Although only one optical reader 35 is illustrated in Fig. 2, it is contemplated that more than one optical reader may be used in the invention. For example, to perform full duplex scanning, additional rollers and an additional transducer (not shown) may be positioned to scan the other side of web 30.

Belt drive unit 36 moves the web 30 of printed matter past the point where the printed matter is to be read and over exit rollers 37 and 39 to, possibly, a roll take up device. Exit rollers 37 and 39 may also be adjustable, either manually or automatically, to compensate for varying web tension. In the embodiment of Fig. 2, exit rollers 37 and 38 may correspond to exit feeder 27 of Fig. 1. Thus, Fig. 2 represents one possible mechanical arrangement of parts necessary to pass printed matter past an optical transducer.

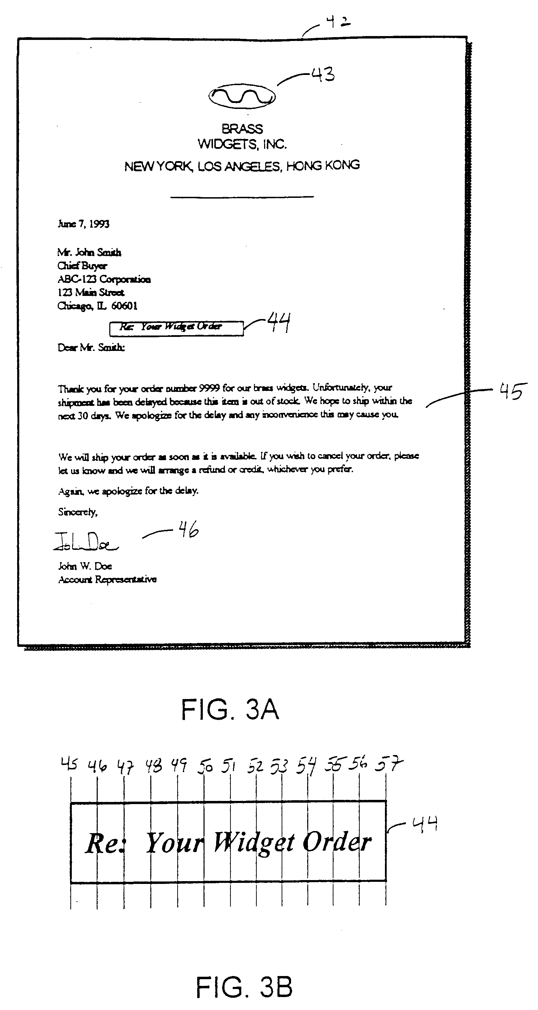

Turning to Figs. 3A through 3E, representative printed matter and the quality problems associated therewith are illustrated. In Fig. 3A, a representative page of printed matter to be inspected in accordance with the invention in order to determine printing quality is illustrated. More specifically, Fig. 3A illustrates a fictional letter 42 with a logo 43, heading 44, body of the letter 45, and a signature block 46. Any areas of letter 42 may be selected and examined in accordance with the invention to determine print quality. However, to explain the nature of print quality problems, Figs. 3B-3E illustrate only a selected area, heading 44, of letter 42 which reads "Your Widget Order."

Fig. 3B illustrates a high quality printing of a selected area 44. As explained in more detail below, this select area maybe subdivided into constituent parts. In Fig. 3B, selected area 44 is divided into twelve equal parts that are delineated by lines 45-57. It is assumed that a human operator that inspected area 44 as shown in Fig. 3B would conclude that the image is printed with high quality.

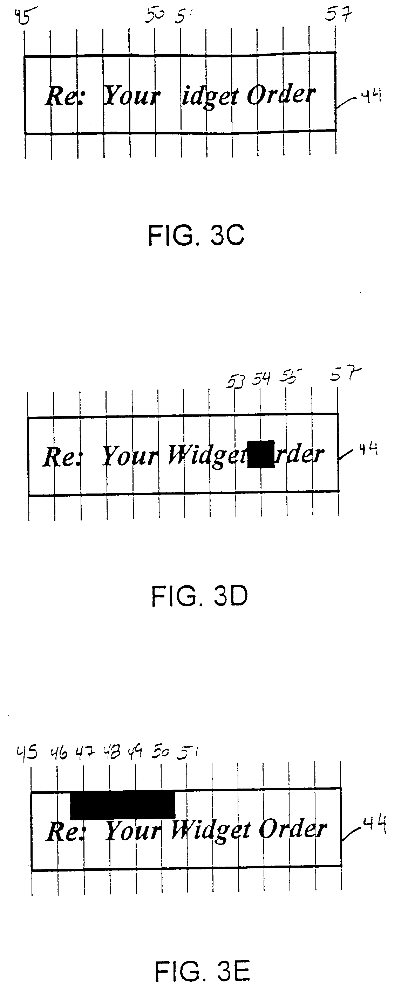

In contrast to the high quality printing of area 44 in Fig. 3B, a human operator inspecting area 44 as shown in Figs. 3C-3E would notice several different problems. In Fig. 3C, the letter "W" in "Widget" appears to be missing between lines 50 and 51. The cause of the problem illustrated by Fig. 3C may be a printer that is malfunctioning or a printer that has scrambled or lost information that was supposed to have been printed.

In Fig. 3D, portions of the "t" in "Widget" and the "O" in "Order" have been obscured by an errant printing spot or blob between lines 53 and 55. The cause of this spot may be from the printer or from any of the mechanical transports associated with the system. In any event, it represents poor quality because area 44 is only partially readable.

In Fig. 3E, another errant printing spot is illustrated in area 44. Although none of the letters of area 44 are illegible due to the spot between lines 46 and 51, the errant spot reflects poor printing quality which may indicate larger printing problems. The cause of the errant spot may be any of the underlying causes responsible for the spot illustrated in Fig. 3D.

Thus, Figs. 3C-3E illustrate various problems which may occur during the printing process. These illustrations of print quality problems, however, do not represent the entire range of print quality problems. There are other print quality problem such as character skew, streaks, light toner, or poor character shape which are not illustrated but which represent serious quality issues in a computer printing operation that the present invention is designed to recognize.

The print defects represented by illustrations Figs. 3C-3E, although possible, are exaggerated for effect. If a printer consistently printed with such poor quality, a conscientious operator would undoubtedly uncover these defects. There are, however, problems in print quality that are undetectable even by conscientious operators due to limitations of human eyesight. These problems, while not affecting the aesthetic presentation of the printed matter, nevertheless affect the machine readability of the printed matter. That is, printer quality problems may adversely affect the printed matter and still be undetectable by human eyesight.

For example, as described above, mailing operations sometimes mail invoices to customers and include a return slip or remittance slip that is later read by a machine. If the return slip has even human undetectable quality problems, the machine may have difficulty reading the return slip. To reduce this type of occurrence, the transducer unit and QSPU are capable of resolving print quality problems, such as spots, voids and other errors, that occur in distances as small as .012 inches.

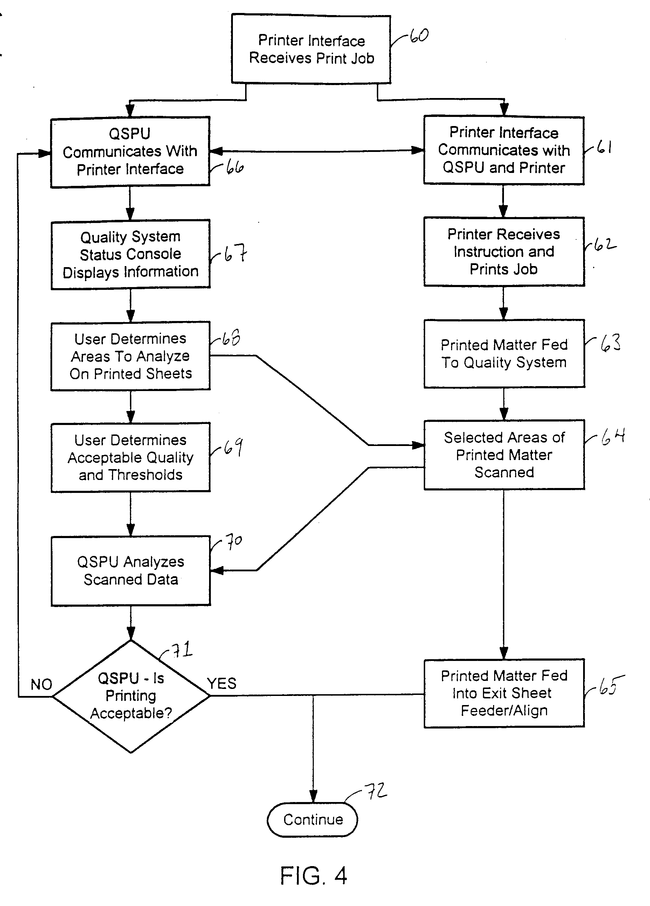

Given the foregoing explanation of the system components and typical quality problems, an overall discussion of the system and method of the invention is now possible. Fig. 4 illustrates the general flow of the system and method of the invention to determine quality of printed matter. The flow of Fig. 4 is separated into two columns. The right column represents the physical steps directed to the printed matter whereas the left column represents the steps taken by the user and QSPU 18 as the printed matter passes through the system.

Step 60 illustrates the beginning of the printing process. In step 60, it is assumed that a printer interface receives a print job. As noted above, this step is not necessary for the invention but represents a convenient starting point for an explanation of a preferred embodiment of the invention. Printer interfaces, such as interface 4 of Fig. 1, may control the printer, may only reflect information being printed by the printer, or may fall somewhere in between these two possibilities. The printer 2 and/or the printer Interface 4 may be interconnected to a network such as a LAN.

Following receipt of the print job, the printer interface communicates with QSPU 18 and printer 1. These communications are represented as steps 61 and 66 in Fig. 4. Thereafter, the printer begins to print the job as illustrated as step 62, feeds the printed matter to the quality system as illustrated as step 63, and the status console 24 of QSPU 18 displays information about the print job as illustrated as step 67. Depending on the capability of interface 4, communications between the printer and the QSPU 18, steps 61 and 66, may range from the printer 2 or QSPU 18 passing simple status information, *i.e.* content that the printer 2 is printing or that printer 2 should stop printing, to the printer 2 or QSPU 18 passing complex print layout information, *i.e.* an indication of the data being printed, the font type, the location of the printing, and the orientation of the printing.

At step 67, status console 24 may display a variety of information that QSPU 18 generated via previous scans or received via printer interface 4. Depending on user preferences, the status console may display a sample of the printed matter, the print job title, the source of the print job or the like. A GUI on the status console generally permits the user to switch between a display of relevant print information to an input mode where a user may input data and instruction to QSPU 18 regarding acceptable quality.

As illustrated at step 68, a user then selects an area or areas on the printed matter to be inspected for quality. The area to be inspected varies depending upon user preference. The area or areas selected by the user may contain static information, *i.e.* information that does not change from document to document on the printed matter, or dynamic information, *i.e.* information that changes from document to document on the printed matter. Area 42 of Fig. 3 represents a static area because it does not change from document to document. Letter 42 of Fig. 3, however, does contain dynamic areas such as the inside address, the date, or any other substantive aspects of the letter that changes from customer to customer.

In one preferred embodiment, the user selects an area of each document of the printed matter to be analyzed by specifying a physical location. That is, the user selects, via the GUI on status console 24, a specific physical location representing a top, bottom, left and right location. It is important to note that the area selected by the user may be changed from job to job and may be maintained in a library which is stored in memory 22. In one preferred embodiment, the area selected may be changed via data input provided by an intelligent interface.

The area that is selected by the user to be checked for quality is stored in memory 22 of QSPU 18 and transmitted to the transducer unit 12 via two way communication link 17. The associated transducer unit 12 hardware and software 15 then controls a transducer or transducers, such as transducer 14 and/or 16, to scan the area or areas selected by the user. Depending on the instructions transmitted by QSPU 18, the transducer unit 12 then scans the selected area as indicated as step 64. If QSPU 18 instructs transducer unit 12 to obtain an image or scan the selected area of the printed matter, transducer unit 12 returns that information to QSPU 18 also via communication link 17.

At step 69, an operator provides information to QSPU 18 via status console 24 on acceptable quality for the user selected area. The quality limitations indicated by the user at step 69 include information such as confirming the print quality of the data printed and the location that the data is printed. The user may also specify an exemplar, in the form of a data structure, to use in a first level quality check. In a preferred embodiment, this quality information is passed to QSPU 18 as a data file stored in memory.

In one embodiment of the invention, quality is verified against preset quality criteria. That is, the operator may not vary the criteria that QSPU 18 uses to determine a quality defect. In this embodiment, however, an operator still inputs a quality error limit at step 69 that indicates the maximum number of quality defects that are acceptable to the operator. For example, the operator may specify a threshold of two detected errors within a thousand scanned lines or fifty detected errors within one hundred scanned lines. If this number of quality defects or "error limit" is exceeded, the system reports a condition of poor quality. Thus, the operator must input to the system, at step 69, the human acceptable quality and thresholds in the form of error limits.

In an alternative embodiment, an operator selects quality criteria at step 69 by selecting one of two or more preset quality criteria options possibly in addition to setting an error limit. In this embodiment, two or more quality criteria options reside in QSPU 18 and these options work in conjunction with recognition engine 20 to detect quality problems. The options may search, for example, for quality defects using a "hard," "medium," or "soft" standard. In the "hard" standard, a void or spot may be minor relative to the "medium" or "soft" options and still qualify as a quality defect. Conversely, voids or spots that may not qualify as quality defects in the "soft" option may qualify as quality defects in the "medium" or "hard" options. Thus, in this embodiment, the operator may input, at step 69, an error limit and the quality threshold used to determine a quality defect.

In yet another embodiment, an operator selects quality at step 69 by accepting or rejecting printed matter presented to the operator by QSPU 18. In this embodiment, QSPU 18 may have preset quality criteria or may have little or, perhaps, no initial quality criteria. As the system begins to scan printed matter, it presents printed matter of questionable quality, depending on the initial quality criteria, to the operator for verification. The operator then indicates that the quality is acceptable or that it is rejected. In this embodiment, the quality thresholds are learned over time. This embodiment may use neural networks or other artificial intelligence techniques to "learn" acceptable from non-acceptable quality. Further, it is noted that given the teachings of this specification, a person of ordinary skill may combine portions of any of the above contemplated embodiments in conjunction with portions of other embodiments to form yet additional quality input options.

After the user has selected an area, step 68, and input acceptable error limits or quality thresholds, step 69, and after the selected areas have been scanned by the transducer unit and the image data returned to the QSPU, step 64, the QSPU processes the image data to determine, decision 71, whether the quality meets or exceeds the preset thresholds or thresholds set by the operator.

If, based on preset or operator input quality thresholds, QSPU 18 determines that the quality is acceptable, QSPU 18 determines that the printing is acceptable and the process continues at step 72. On the other hand, if QSPU 18 along with its recognition engine determines one or more quality defects, QSPU 18 must also verify that the number of quality defects does not exceed the error limit set by the user at step 69. If the number of quality defects is below the error limit, QSPU 18 determines that the printing is acceptable and the process continues at step 72. However, if the number of quality defects exceeds the error limit, QSPU 18 communicates, step 66, with the printer and informs the printer to cease printing.

If the quality is acceptable or if the number of quality defects is below the error limit, the printer continues to print the job, step 62, the printed matter is fed to the quality system, step 63, selected areas are continually scanned, step 64, and the printed matter is fed out of the system and continued to post-printing devices, step 65, as described above. It is noted that the steps illustrated in Fig. 4 are meant to provide a conceptual understanding of the invention. As implemented, other steps may be performed or the steps may be performed in a different order.

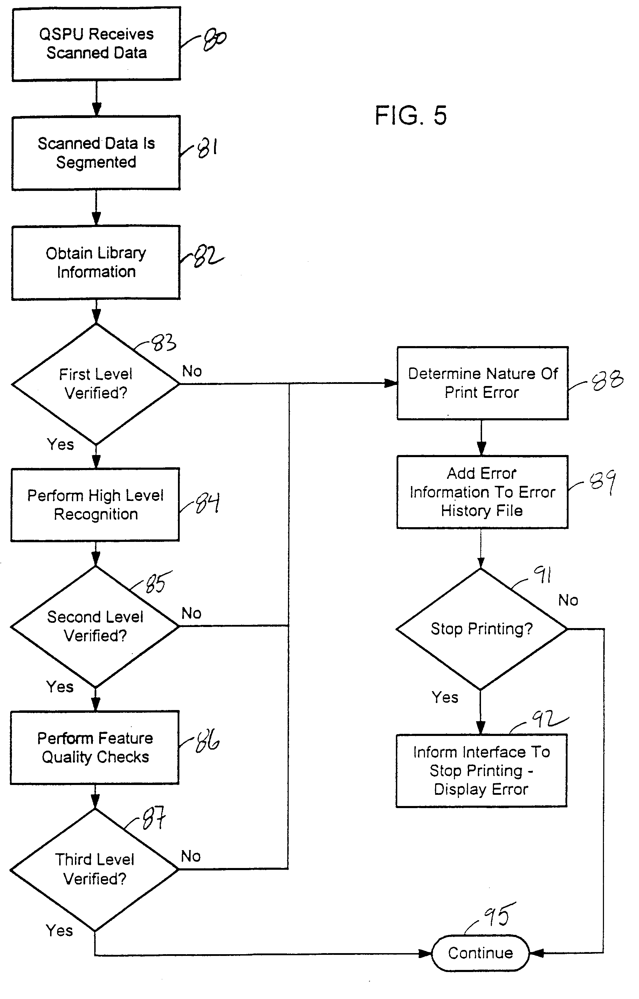

Fig. 5 illustrates the specific steps undertaken by QSPU 18 to determine whether the printed matter satisfies the user input acceptable quality limits. In a preferred embodiment, three quality level checks are undertaken to ascertain quality: a first level, or rough level, is illustrated as steps 81-83; an intermediate level is illustrated as steps 84-85; and a final feature level is illustrated as steps 86-87.

In the first level, the scanned data is segmented into discrete areas. This step may be performed by segmenting the scanned area into discrete physical areas as illustrated the areas between the lines 40-52 of Figs. 3B-3E. This step of segmentation may also be performed by recognition engine 20 which segments the scanned area into boxes around each character.

In one preferred embodiment, data segmentation is performed as follows. A frame signal image of the selected area is produced by the transducer unit 12 and is transmitted to QSPU 18 via communication link 17. QSPU 18 receives the signal through a port and stores the scanned area in memory 22. The scanned image is stored in QSPU 18 memory as a series of points or pixels. Thereafter, QSPU 18 has an area of memory 22 corresponding to the scanned image with at least a single bit indicating a 1 or a 0 for each pixel and representing whether each pixel is on or off. To perform color scanning and storage, memory 22 stores more than one bit for each pixel depending on the color resolution desired.

After the scanned image is stored in memory, recognition engine 20 compares pixels that are on with pixels that are off. If an area of memory corresponding to the scanned image has a threshold number of off pixels, recognition engine 20 assumes a white space and segments the area. Likewise, if an area of memory indicates contiguous or neighboring on pixels, recognition engine 20 assumes the presence of a character and also segments the area. In such fashion of comparing on pixels to off pixels, recognition engine 20 is able to segment the scanned area of memory into characters and white space. This process of segmentation is illustrated in Fig. 5 as step 81.

Following segmentation, QSPU 18 checks the segmented characters against an exemplar. The exemplar may take the form of selecting or indicating the font of the scanned area to QSPU 18. QSPU 18 then retrieves information about the font from another area of memory 22 or from a stored library which may also reside in memory. This retrieval of information is generally illustrated as step 82. After the font or other information is obtained, step 82, QSPU 18 determines an appropriate height, width, and permissible skew angles for the segmented area. QSPU 18 through recognition engine 20 then ascertains the height, width and skew angles of the segmented data. If the segmented characters fit retrieved height and width and skew angle specifications, the characters pass the first level quality verification. If the characters do not fit the height and width specifications, they are unrecognized and fail the first level verification. This step is globally illustrated as decisional 83.

The segmentation of data and the first low level quality check assists QSPU 18 in locating quality errors such as skew, poor image quality, spotting and streaks. If a segmented character has too few or too many on pixels, QSPU 18 concludes that one or more of these potential problems exists on the printed matter.

If the first or low level test is failed, QSPU 18 attempts to determine the nature of the print error as indicated at step 88. QSPU 18 may perform this step by referring to an error log and a data structure. Every time QSPU 18 detects an error, it logs the error in an error file, step 89. The error log or file is a separate file stored in memory 22. This file is available for user review via status console 24 and for QSPU 18 use in generating separate data structures which relate to all printing errors.

A user may add information to the error file that aids QSPU 18 to determine the nature of the quality problem. For example, if a user recognizes that skewed images failed the low level test based on a certain pattern, the user can add that information to such failures in the error log. Thereafter, if QSPU 18 recognizes a similar pattern after referencing the error file, QSPU 18 can inform a user via status console 24 of the nature of the error.

After the error file has been updated with the error, step 89, QSPU 18 may communicate the quality problem to the printer interface 4 via communication link 25. If printer 2 has an intelligent interface, QSPU 18 may pass to the interface an instruction to stop printing and other information regarding the nature and type of error. If printer 2 is able to vary or adjust certain printing parameters in order to affect or improve print quality, the QSPU 18 may pass to the interface an instruction to vary such parameters sufficiently to rectify or mitigate any quality problems detected. This may provide automatic, closed-loop control over print quality.

As noted above, if QSPU 18 determines that an error limit has been exceeded, it also determines that the printer must cease printing. This decision is indicated as decision 91 in Fig. 5. To make this decision, QSPU 18 retrieves the user input stored quality information, compares this limit information to the number of errors detected and commands the printer interface 4 to cease printing, step 92, if the number is exceeded. On the other hand, if the print quality error is within acceptable limits, the process continues, step 95.

The first level determination is designed to be a rapid check on the quality of the data. If the quality fails the first step, additional quality checks are unnecessary. On the other hand, if the printed matter satisfies the first quality check, additional checks are still necessary.

The second level check on quality is indicated as steps 84-85. In step 84, QSPU 18 performs high level recognition of the selected area using its recognition engine 20. This step is similar to the first level check but involves a more specific analysis of the segmented data or characters. Among other things, this second level check insures that the printer is printing accurate data in an accurate location. The data recognized at step 84 may be bar code information, MICR or OCR.

QSPU 18 performs the second level check by selecting 20 to 30 locations each having 1 to 5 pixels of the segmented data and comparing this information to stored or user input font information. At this level, QSPU 18 may attempt to verify every scanned character or it may select representative characters to analyze. Locations both inside a character and in the white space surrounding the character are analyzed. QSPU 18 performs a comparison between the on and off pixels of a sample or exemplar font with the on and off pixels of the scanned area. If the comparison yields differences that are less than or within preset or user input thresholds, the second level check is satisfied and QSPU 18 will proceed to the third level check. On the other hand, if the comparison yields differences that exceeds quality thresholds, QSPU 18 proceeds to the steps described above for a failure of the first level check. The decision on the second level check is indicated as decisional 85.

During the second level check, a QSPU 18 of one embodiment of the invention also compares the detected character data to the expected data for that location. If the scanned area is a static area, QSPU 18 searches its memory to determine the expected data to be printed and compares this data for a match. On the other hand, if the scanned area contains dynamic or variable data, QSPU 18 has to receive data that is expected to be printed from printer interface 4 or from another source. In either case, QSPU 18 compares the scanned data with the expected data and, if any differences exist, identifies a quality problem at the second level.

If the second level check results in a conclusion of acceptable print quality, QSPU 18 initiates a third and final check on print quality. The third check is indicated at step 86. In this step, QSPU 18 selects approximately 5 to 10 locations each having 1 to 5 pixels in height and width. These locations are also within the character and the surrounding white space. As in the preceding steps, QSPU 18 compares the segmented locations with an exemplar to determine if the user input quality thresholds are exceeded.

The function of the third level check is to determine whether spurious voids, spots, streaks or blobs are present in the printed matter. This step is undertaken even though the placement and content of the printed matter has been verified as accurate. Thus, the third level inspection is undertaken specifically to determine quality problems not human readability problems. Decisional 87 indicates that if QSPU 18 determines that the third level test is not satisfied, QSPU 18 follows the same steps, i.e. steps 88-92, that it would follow if the first or second level tests were failed. If the third level is passed, the process continues, step 95.

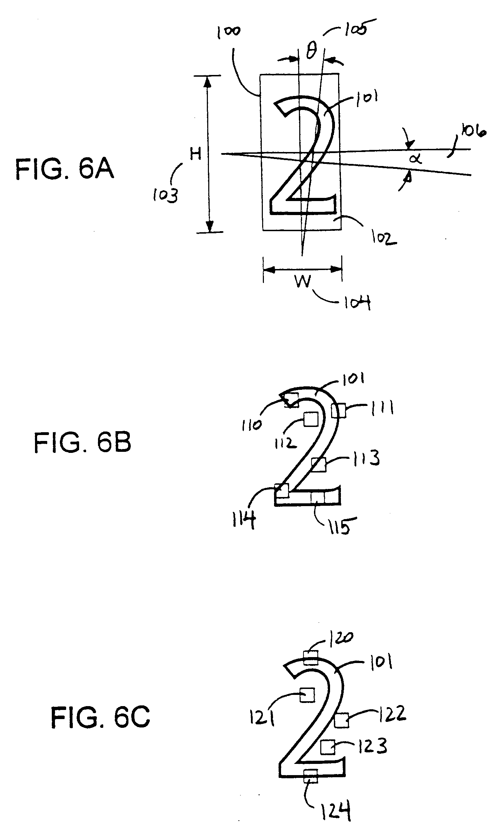

Figs. 6A-6C are useful illustrations to explain the three step quality detection system and process. Turning first to Fig. 6A, therein is illustrated a numeral "2" as element 101. In the first step of the three step system, QSPU 18 and recognition engine 20 separate the numeral "2" 101 from white space as indicated by box 100. Next, QSPU 18, through processor 19 and recognition engine 20 determine the height 103 and width 104 of the numeral. Processor 19 and recognition engine 20 also determine a skew angle. In Fig. 6A, the skew angle is indicated by the Greek letter alpha ("α") as element 106 or, alternatively, by the Greek letter theta ("θ") as element 105. Processor 19 and recognition engine 20 may perform this skew determining step as described above and/or through any techniques that are known in the art such as those described in United States Patent 5,355,420, which is hereby incorporated by reference.

After the height, width, and skew are determined, processor 19 and recognition engine 20 compare these basic physical characteristics with information stored in memory 22 to determine if these characteristics match a known font and, if so, are within either prestored or user selected tolerances for that font. If the character is within the tolerance for a recognized font for height, width and skew angle, processor 19 and recognition engine 20 proceed to the second level. If not, processor 19 and recognition engine 20 log a quality defect in memory 22 and compare the number of quality defects to the user selected error limit. If the limit is not exceeded, processor 19 and engine 20 proceed to the second level. If the error limit is exceeded, QSPU 18 concludes that the printer is printing poor quality and causes the printer to cease printing.

Fig. 6B illustrates a potential second level check. In Fig. 6B, it is assumed that the same numeral 2 from Fig. 6A, *i.e.* element 101, has passed a first level quality check. In Fig. 6B, several areas, *i.e.* 110 through 115, of the numeral are examined to determine the identity of the character and the quality of the character. Although only six analysis areas are indicated on Fig. 6B for brevity, QSPU 18 may inspect fewer or more locations.

By selecting these analysis areas and counting the number of on and/or off pixels in these area, processor 19 and recognition engine 20 may accurately identify the character as well as potentially identifying quality defects. This is usually, but not necessarily, accomplished by considering the number and locations of on and/or off pixels and comparing this information with information stored as a data structure that relates a unique number of pixels in an analysis area to a unique character. Once the states of the pixels in the analysis area are known, a "look-up" process on the data structure identifies a unique character for that pixel pattern for all analysis areas. It is noted that certain analysis areas, such as area 112, are in white space, certain analysis areas, such as area 115, are located entirely within the character, and certain analysis areas, such as area 111, span white space as well as character space. This second level quality check, therefore, identifies the data content of the separated character.

Processor 19 and recognition engine 20 log a quality defect if a unique character cannot be determined. Moreover, QSPU 18 may log a quality defect for each non-matching analysis area. As in the first level check, if the number of quality defects exceeds the user input error limit, QSPU 18 causes the printer to cease printing.

Finally, as illustrated in Fig. 6C, a third level check is performed. This check is similar to the second level check but is performed on different analysis areas, *i.e.* 120-124, than those areas used to determine the identity of the character in the second level quality check. White space areas, such as areas 121-123, are checked to determine that the number of on pixels does not exceed a preset threshold. Analysis areas entirely on the character or overlapping the character are also checked to compare on pixels with a known threshold for those pixels. If the number of on pixels differs from the threshold, QSPU 18 logs a print quality defect. As in the case of the first level and second level checks, if the number of quality defects exceeds the user input error limit, QSPU 18 causes the printer to cease printing.

The three step process of the invention to determine quality of printed matter provides a fast and efficient mechanism to determine print quality. By its nature, the invention can process scanned data rapidly to maintain pace with high speed printers and the analysis can accommodate a wide variety of fonts and print faces. Moreover, the process is flexible because it permits various analysis areas and thresholds to be applied to the quality determination.

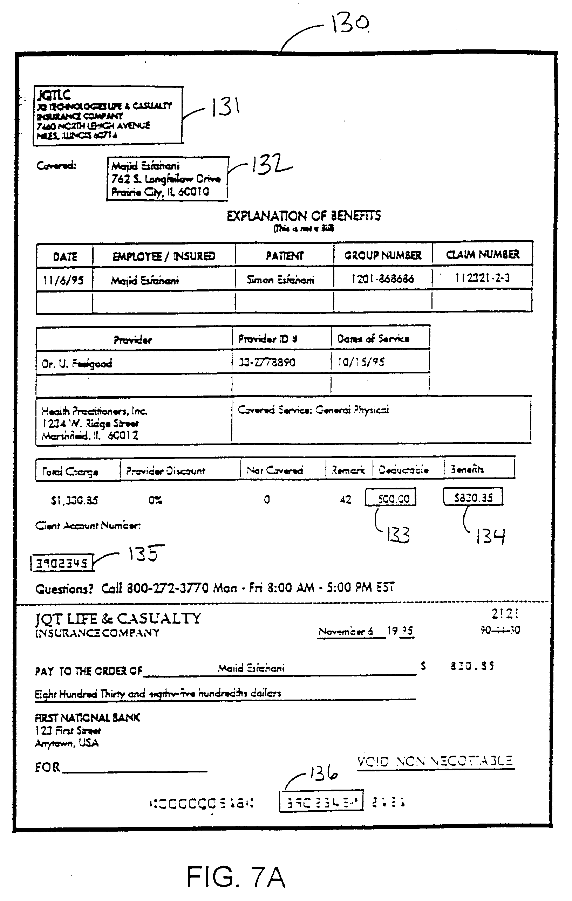

Fig. 7A is an illustration of another page of printed matter that may be analyzed in accordance with the invention. Printed form 130 represents an insurance disbursement with a top portion indicating a description of services along with the amount of the disbursement and a bottom portion below a dotted perforation line that includes a sample negotiable check portion. The top portion includes a logo 131, an inside address, 132, a deductible amount 133, a benefit portion 134, and an account number 135. The bottom check portion includes a standard check with an account number 136 printed in MICR. Fig. 7A thus differs from Fig. 3A by including printed areas that are printed by more than one printer, *i.e.* an impact MICR printer for printing the account number on the check portion in MICR and a non-impact printer for all other areas.

It is important that the MICR printer print information on the check that corresponds to information printed by the non-impact printer on the remainder of the page. Frequently, however, the MICR printer loses synchronization with the non-impact printer and prints MICR lines that do not correspond to the remainder of the document. Through the system and method described above, the invention is able to detect such an erroneous printing and is able to alert the operator and/or cause either printer to stop printing.

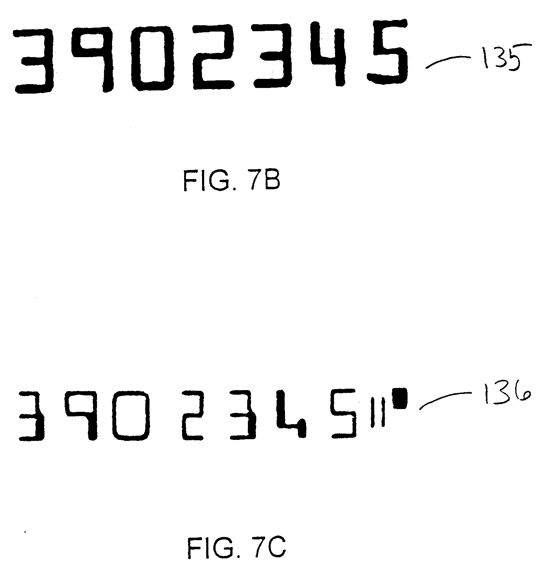

Fig. 7B is an expanded view of the area corresponding to the non-impact printed matter account area 135 of printed form 130. Fig. 7C is an expanded view of the impact MICR printed matter account area 136 of printed form 130. These two areas are illustrated because they are suitable areas for an operator to select to check for quality of printing between the two different types of printers.

An operator using the inventive system and method selects areas 135 and 136 through a GUI on status console 24 to be analyzed for quality. The operator, also through status console 24, indicates to QSPU 18 to compare the two account areas 135 to 136. Thereafter, the system scans the account areas, processes each area, *i.e.* with the three step detection system and method, and ascertains at least the identity of each character in the account area. QSPU 18 through processor 19 then compares a first printer account area, 135, with a second printer's account area, 136. If the content of the two areas differ, QSPU 18 will cause one or both printers to cease printing.

By performing the quality verification rapidly, QSPU 18 may verify differing areas on every page, even at a high printing rate, and inform an operator of the results via status console 24 or other annunciator. It is noted that this application of the inventive system and method is not limited to systems involving an impact and non-impact printer. Any operation with more than one printer has a potential to fall out of synchronization. These systems with two or more printers, including duplex printing operations using tandem simplex printers, will benefit from the ability of the present system and method to rapidly recognize characters, compare those characters and cause the printers to cease printing when they fall out of synchronization.

Non-font images such as logo 43 in Fig. 3A can be quality verified by employing a modification of the technique described above. First, the logo 43 or a part thereof may be segmented. Segmentation may be accomplished by dividing the selected area based upon a grid of rectangles, for example, or as described in any of the above referenced issued United States patents. Each rectangle includes an array of pixels, such as a 30 by 30 array of pixels. Each rectangle, or each of certain selected rectangles, is compared to an exemplar benchmark. The comparison may be made by summing the number of on pixels in the rectangle and comparing the sum to the sum of on pixels in the preset or user input exemplar benchmark. If the number of pixels in the rectangle differs from that of the exemplar benchmark by more than a predetermined amount, then a print quality error is logged. The predetermined amount of permissible variation may itself be a function of the number of on pixels. Thus, a rectangle that is supposed to be all white may be logged as an error if just two pixels are black, where a rectangle that is roughly half white and half black may require a greater number, for example 10, of incorrectly printed pixels for an error to be logged. This variable threshold corresponds with the varying sensitivity of the human vision system to errors under differing circumstances.

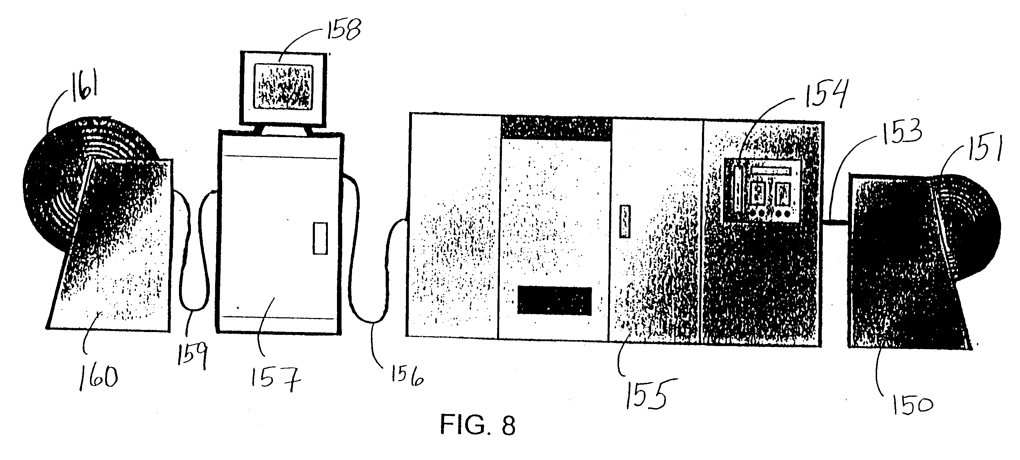

Fig. 8 illustrates a possible physical arrangement of the computer printing operation employing the present inventive system and method. Fig. 8 illustrates a roll feeder 150 with blank roll 151 feeding a web 153 into a printer 155. Printer 155 prints onto web 153 and feeds the printed matter 156 into a physical housing 157 that contains QSPU 18 and optical transducer unit 12 of Fig. 1. The transducing of the printed matter and processing is performed in housing 157 and information regarding the processing is output on monitor 158 comprising at least a portion of status console 24 of Fig. 1. Processed printed matter 159 is then fed onto an exit roll feeder unit 160 as roll 161. In this possible physical arrangement, roll feeders 150 and 160 correspond respectively to roll unit 6 and exit roll unit 27 of Fig. 1. However, as pointed out in Fig. 2, roll unit 6 and roll unit 27 of Fig. 1 may also correspond to rollers within housing 157 comprising part of a feed path before and after the transducing of the printed matter.

The advantages of placing the inventive system and method into a physical arrangement such as that illustrated in Fig. 8 are significant. A computer printing operation may operate in true "roll to roll" fashion with a high degree of confidence that the printer is printing high quality, accurate output. By operating with the inventive system and method, computing printing operations reduce waste and printing down-time by quickly alerting operators that printing errors have occurred. Moreover, by running printers with fewer operators and by running printers for greater time periods without operator interruptions to verify quality, owners of expensive printers can dramatically increase their printed output and revenues. This increase in revenue helps increase the rate of return on a costly investment such as a high speed printer.

Other objects, features, and advantages of the present invention will be more readily apparent upon reading the above description. It should be understood that the detailed description and specific embodiments are given by way of illustration only, since various changes and modifications within the spirit and scope of the invention will become apparent to those skilled in the art from this detailed description.

## Claims

1. A method for analyzing output of a printer comprising the steps of:
a. determining at least one select area of printed matter to be analyzed;
b. controllably feeding said printed matter past at least one optical transducer;
c. controlling said at least one optical transducer to produce electrical signals representative of said at least one select area of said printed matter;
d. storing said electrical signals in a memory;
e. processing said electrical signals to produce further electrical signals representative of discrete regions of said select area;
f. providing a human acceptable quality limit;
g. comparing said further electrical signals with said quality limit to determine if said electrical signals fall below said quality limit;
h. generating at least one output signal based on the outcome of said comparing step.

2. The method in accordance with claim 1 further including the step of controlling said printer based on said output signal.

3. The method in accordance with claim 1 further including the step of displaying output on an operator status console based on said output signal.

4. The method in accordance with claim 1 wherein said step of determining at least one select area and said step of providing a quality limit is performed by a human operator.

5. The method in accordance with claim 1 wherein said step of determining at least one select area and said step of providing a quality limit is performed by a computer.
